# FASCICULE DE BREVET EUROPEEN

(11) **EP 0 976 804 B1**
(45) Date de publication et mention de la délivrance du brevet: **02.06.2010**
(21) Numéro de dépôt: 99202402.6
(22) Date de dépôt: 21.07.1999
(51) Int. Cl.: B32B 27/28, C09J 127/12, C09J 123/26, C09J 133/06

(54) **Structures à couches polymériques multiples, leur procédé de préparation et leur utilisation**
Mehrschichtpolymerstrukturen, Verfahren zu ihrer Herstellung und ihre Verwendung
Multilayered polymeric structures, process for their preparation and their use

(30) Priorité: 27.07.1998 BE 9800563
(43) Date de publication de la demande: 02.02.2000
(73) Titulaire: SOLVAY (Société Anonyme), 1050 Bruxelles (BE)
(72) Inventeur: Oreins, Jean-Marie, 2840 Haacht (BE); Thulliez, Vincent, 1030 Bruxelles (BE); Laurent, Guy, 5020 Vedrin (BE); Declerck, Fredy, 1850 Grimbergen (BE)
(74) Mandataire: Jacques, Philippe

(56) Documents cités:
- EP-A- 0 206 689
- EP-A- 0 450 994
- CHEMICAL ABSTRACTS, vol. 107, no. 14, 5 octobre 1987 (1987-10-05) Columbus, Ohio, US; abstract no. 116525, XP002121957 & JP 62 057448 A (MITSUBISHI PETROCHEMICAL CO., LTD., JAPAN) 13 mars 1987 (1987-03-13) & DATABASE WPI Section Ch, Week 8716 Derwent Publications Ltd., London, GB; Class A14, AN 87-112146
- DATABASE WPI Section Ch, Week 198716, Derwent Publications Ltd., London, GB; Class A14, AN 1987-112146 & JP 62 057448 A (MITSUBISHI PETROCHEMICAL CO LTD) 13 Mars 1987

## Description

La présente invention concerne des structures à couches polymériques multiples comprenant une couche (A) en polymère thermoplastique d'hydrocarbure halogéné liée à une couche (C) en polymère thermoplastique non halogéné non compatible avec (A) par l'intermédiaire d'une couche (B) à base d'un adhésif polymérique. L'invention concerne également des procédés de préparation de ces structures. L'invention concerne en outre l'utilisation de ces structures pour la fabrication de tubes, de tuyaux, de films, de feuilles, de plaques et de corps creux.

Les polymères thermoplastiques d'hydrocarbures halogénés, et plus particulièrement les polymères thermoplastiques d'hydrocarbures fluorés, sont des polymères qui présentent un ensemble de propriétés intéressantes et, notamment, une imperméabilité aux liquides et aux gaz, une inertie chimique élevée et une excellente tenue au vieillissement. De ce fait, ils trouvent des applications multiples dans des domaines très divers et, notamment, dans le transport et le stockage de liquides et de gaz et dans la protection contre la corrosion. Néanmoins, ils présentent l'inconvénient d'être relativement coûteux, ce qui risque de limiter leurs débouchés.

Un moyen approprié pour réduire le coût des articles façonnés en ce type de polymère consiste à utiliser ces polymères sous la forme de structures à couches polymériques multiples (films, feuilles, plaques, tubes, corps creux, etc.) dans lesquelles sont associés à d'autres polymères, lesquels apportent, par ailleurs, leurs propres propriétés et avantages, tels que par exemple la résistance mécanique, l'aptitude au scellage, la résistance à la griffe, etc. Toutefois, les polymères thermoplastiques d'hydrocarbures halogénés, et plus particulièrement les polymères thermoplastiques d'hydrocarbures fluorés, sont connus pour être des matériaux difficiles à faire adhérer à d'autres polymères.

Pour résoudre ce problème, de nombreuses solutions ont été proposées et notamment d'interposer entre le polymère halogéné et le polymère non compatible une couche d'adhésif pour assurer un lien adhérent entre ces deux polymères.

Ce type de solution a notamment été décrit dans les demandes de brevet EP-A1-112406, EP-A1-124931, EP-A1-484053 et EP-A1-450994.

Ainsi, la demande de brevet EP-A1-112406 concerne un récipient creux multicouche composé d'une couche interne en résine thermoplastique fluorocarbonée liée à une couche externe en polyoléfine par l'intermédiaire d'une couche faite d'un mélange de résines comprenant une polyoléfine greffée par un composé glycidyle insaturé et une polyoléfine.

De même, la demande de brevet EP-A1-124931 décrit des structures thermoplastiques à couches multiples comprenant une couche en polymère du fluorure de vinyle ou de vinylidène liée à une couche en polymère d'alpha-oléfine à l'intervention conjointe d'un polymère d'acétate de vinyle et d'un copolymère d'éthylène et d'acétate de vinyle.

La demande de brevet EP-A1-484053 mentionne un procédé de préparation d'un laminé à 3 couches constituée d'une couche d'un polymère oléfinique à laquelle on fait adhérer une couche de résine fluorée par fusion à l'aide d'un polymère adhésif qui consiste en un produit de polymérisation d'un polymère oléfinique avec un monomère comprenant un (méth)acrylate d'alkyle et/ou un monomère insaturé contenant du fluor.

La demande de brevet EP-A1-450994 décrit des matériaux composites obtenus par coextrusion d'un polymère de fluorure de vinylidène et d'une résine thermoplastique incompatible avec le polymère de fluorure de vinylidène par l'intermédiaire d'une couche constituée d'un mélange à base de polymère de fluorure de vinylidène, de polyméthacrylate d'alcoyle et d'élastomère acrylique et/ou méthacrylique

Ces types de couches d'adhésif proposées comme solutions dans ces cas particuliers ne contiennent cependant pas un mélange des deux polymères à faire adhérer et présentent de ce fait des propriétés d'adhésion qui pourraient être améliorées.

Il a aussi été proposé de faire adhérer un polymère halogéné, en l'occurrence un polymère fluoré, à un polymère non compatible par l'intermédiaire de deux couches d'adhésif distinctes.

Ainsi, le brevet EP-B1-206689 concerne un laminé comprenant au moins deux couches d'adhésif distinctes en contact constituées d'un polymère d'hydrocarbure fluoré modifié par un groupe carboxyle, anhydride d'acide, hydroxyle ou époxyde et d'un polymère d'alpha-oléfine modifié par un groupe carboxyle, anhydride d'acide, hydroxyle ou époxyde différent du précédent. Ces deux couches d'adhésif distinctes peuvent être placées sur une couche de substrat préparé à partir d'un matériau choisi parmi divers polymères dont le fluorure de polyvinylidène, le polyéthylène et le nylon. Ainsi, est cité un laminé à 4 couches comprenant une couche de PVDF liée à une couche de PE par l'intermédiaire de deux couches d'adhésif distinctes. Cette structure multicouche présente l'inconvénient d'être constituée de deux couches d'adhésif et donc au total de 4 couches ce qui pose des problèmes techniques lors de la coextrusion au niveau industriel qui est plus facilement envisageable techniquement si elle est limitée à 3 couches, donc avec une seule couche d'adhésif.

En raison de leur moindre coût et des considérations techniques de fabrication décrites ci-dessus, les structures ayant une seule couche d'adhésif sont préférées à celles comprenant plus d'une couche d'adhésif.

La demande de brevet JP-A-62-057448 mentionne une composition comprenant un polymère de fluorure de vinylidène, un copolymère de méthacrylate de glycidyle et de méthacrylate de méthyle et un polymère d'alphaoléfine greffé par l'anhydride maléique. Cette composition peut être notamment utilisée pour la fabrication de laminés, en particulier avec d'autres couches de polymère ou de métal.

Donc le problème qui subsiste est d'utiliser un adhésif qui peut se lier de manière satisfaisante à une couche de polymère thermoplastique d'hydrocarbure halogéné d'un côté et à une couche de polymère thermoplastique non compatible de l'autre côté en vue de former des structures à couches polymériques multiples ne contenant qu'une seule couche d'adhésif.

Afin de remédier à l'inconvénient précité, la présente invention utilise un adhésif polymérique homogène qui contienne un mélange des deux polymères à faire adhérer et qui permette ainsi d'assurer une bonne adhésion entre un polymère thermoplastique d'hydrocarbure halogéné et un polymère thermoplastique non compatible choisi parmi les polyoléfines et les polyamides.

L'invention a également pour objet la préparation de structures à couches polymériques multiples.

L'invention a pour objet de fournir des structures à couches polymériques multiples, selon la revendication 1, comprenant une couche (A) en polymère thermoplastique d'hydrocarbure halogéné liée à une couche (C) en polymère thermoplastique non halogéné non compatible par l'intermédiaire d'une seule couche (B) à base d'un adhésif polymérique homogène qui permette à ces structures d'allier une bonne adhésion à de bonnes propriétés barrière et à un coût pas trop élevé, d'être facilement coextrudées au niveau industriel et de ne pas présenter, de ce fait, l'inconvénient précité.

L'invention a également pour objet un procédé de préparation de ces structures à couches polymériques multiples ainsi que l'utilisation de ces structures à couches polymériques multiples pour la fabrication de tubes, de tuyaux, de films, de feuilles, de plaques et de corps creux.

L'adhésif polymérique comprend une mélange homogène d'au moins trois constituants : (a) au moins un polymère thermoplastique d'hydrocarbure halogéné, (b) au moins un copolymère de monomères monoéthyléniques porteurs d'une fonction carboxylate d'alkyle et (c) au moins un polymère d'alpha-oléfine modifié par l'incorporation d'au moins un groupe fonctionnel choisi parmi un carboxyle, un anhydride d'acide, un hydroxyle et un époxyde.

Par polymère thermoplastique d'hydrocarbure halogéné, on entend désigner les homopolymères et les copolymères obtenus à partir de monomères monoéthyléniques contenant au moins 2 atomes de carbone et au moins 1 atome d'halogène choisi parmi le fluor et le chlore. On entend également désigner les mélanges d'homopolymères et de copolymères. Comme exemples de polymère thermoplastique d'hydrocarbure halogéné utilisable dans la présente invention, on peut citer notamment les homopolymères et les copolymères du fluorure de vinylidène, du fluorure de vinyle, du trifluoréthylène, du chlorotrifluoréthylène, du tétrafluoréthylène, de l'hexafluoropropylène, du chlorure de vinyle et du chlorure de vinylidène ainsi que les copolymères d'un de ces monomères avec un autre monomère monoéthylénique non halogéné tel l'éthylène, l'acétate de vinyle et les monomères acryliques ou méthacryliques.

Le polymère thermoplastique d'hydrocarbure halogéné (a) est de préférence un polymère thermoplastique d'hydrocarbure fluoré. De manière plus que préférée, le polymère thermoplastique d'hydrocarbure halogéné (a) est un polymère du fluorure de vinylidène.

Par polymère thermoplastique d'hydrocarbure fluoré, on entend désigner les homopolymères et les copolymères obtenus à partir de monomères monoéthyléniques contenant au moins 2 atomes de carbone et au moins 1 atome de fluor. Les monomères monoéthyléniques peuvent en outre contenir un ou plusieurs atomes de chlore en plus des atomes de fluor. On entend également désigner les mélanges d'homopolymères et de copolymères. Comme exemples de polymère thermoplastique d'hydrocarbure fluoré utilisable dans la présente invention, on peut citer notamment les homopolymères et les copolymères du fluorure de vinylidène, du fluorure de vinyle, du trifluoréthylène, du chlorotrifluoréthylène, du tétrafluoréthylène et de l'hexafluoropropylène ainsi que les copolymères d'un de ces monomères avec un autre monomère monoéthylénique non halogéné tel l'éthylène, l'acétate de vinyle et les monomères acryliques ou méthacryliques. Les polymères du fluorure de vinylidène sont préférés.

Par polymère du fluorure de vinylidène, on entend désigner aux fins de la présente invention tous les polymères contenant au moins environ 75 % en poids d'unités monomériques dérivées du fluorure de vinylidène. Les polymères du fluorure de vinylidène qui peuvent convenir à la réalisation des structures à couches polymériques multiples selon l'invention comprennent donc aussi bien les homopolymères du fluorure de vinylidène, que les copolymères du fluorure de vinylidène contenant des unités monomériques dérivées d'un ou de plusieurs comonomères éthyléniquement insaturés, avantageusement fluorés, de même que les mélanges de ces polymères. A titre d'exemples de comonoméres fluorés utilisables, on peut mentionner le fluorure de vinyle, le trifluoréthylène, le chlorotrifluoréthylène, le tétrafluoréthylène et l'hexafluoropropylène.

Le copolymère de monomères monoéthyléniques porteurs d'une fonction carboxylate d'alkyle (b) utilisable aux fins de la présente invention est un copolymère d'au moins deux monomères monoéthyléniques porteurs d'une fonction carboxylate d'alkyle.

Parmi les monomères monoéthyléniques porteurs d'une fonction carboxylate d'alkyle utilisables pour la réalisation de la présente invention, on donne la préférence aux carboxylates d'alkyle qui peuvent être obtenus par la réaction d'un acide carboxylique monoéthylénique contenant au total au moins 3 atomes de carbone, de préférence au moins 5 atomes de carbone, alternativement au moins 8 atomes de carbone, avec un alcool choisi parmi les alcools linéaires ou ramifiés contenant au moins 1 atome de carbone et au plus 20 atomes de carbone comme par exemple le méthanol, l'éthanol, l'isopropanol, le n-butanol, l'isobutanol, le t-butanol, l'hexanol, le n-octanol, le 2-éthylhexanol, le décanol, l'isodécanol, l'alcool laurique, l'hexadécanol et l'octadécanol, mais aussi le glycidol, le cyclohexanol et l'alcool benzylique. Parmi ces alcools, ceux contenant de 1 à 10 atomes de carbone sont préférés. Le méthanol et le glycidol sont tout particulièrement préférés. Les acrylate et méthacrylate de méthyle et de glycidyle sont les monomères monoéthyléniques porteurs d'une fonction carboxylate d'alkyle préférés. Les méthacrylates de méthyle et de glycidyle sont tout particulièrement préférés.

Parmi les monomères monoéthyléniques porteurs d'une fonction carboxylate d'alkyle utilisables pour la réalisation de la présente invention, on donne la préférence aux carboxylates d'alkyle qui peuvent être obtenus par la réaction d'un acide carboxylique monoéthylénique contenant au total au plus 8 atomes de carbone, de préférence au plus 5 atomes de carbone, alternativement au plus 3 atomes de carbone, avec un alcool choisi parmi les alcools linéaires ou ramifiés contenant au moins 1 atome de carbone et au plus 20 atomes de carbone comme par exemple le méthanol, l'éthanol, l'isopropanol, le n-butanol, l'isobutanol, le t-butanol, l'hexanol, le n-octanol, le 2-éthylhexanol, le décanol, l'isodécanol, l'alcool laurique, l'hexadécanol et l'octadécanol, mais aussi le glycidol, le cyclohexanol et l'alcool benzylique. Parmi ces alcools, ceux contenant de 1 à 10 atomes de carbone sont préférés. Le méthanol et le glycidol sont tout particulièrement préférés. Les acrylate et méthacrylate de méthyle et de glycidyle sont les monomères monoéthyléniques porteurs d'une fonction carboxylate d'alkyle préférés. Les méthacrylates de méthyle et de glycidyle sont tout particulièrement préférés.

De manière préférée, le copolymère (b) est un copolymère de deux monomères monoéthyléniques porteurs d'une fonction carboxylate d'alkyle chacun d'eux pouvant être obtenu par la réaction d'un monomère monoéthylénique porteur d'une fonction acide carboxylique contenant au total de 3 à 8 atomes de carbone avec un alcool linéaire ou ramifié contenant de 1 à 20 atomes de carbone.

De manière plus que préférée, le copolymère (b) est un copolymère de deux monomères monoéthyléniques porteurs d'une fonction carboxylate d'alkyle chacun d'eux pouvant être obtenu par la réaction d'un monomère monoéthylénique porteur d'une fonction acide carboxylique contenant au total de 3 à 5 atomes de carbone avec un alcool linéaire ou ramifié contenant de 1 à 10 atomes de carbone.

Le copolymère (b) tout particulièrement préféré est un copolymère de méthacrylate de méthyle et de méthacrylate de glycidyle.

Le copolymère (b) utilisé aux fins de la présente invention peut contenir au moins de 5 à 95 % en poids, par rapport au poids total des monomères, du premier monomère monoéthylénique porteur d'une fonction carboxylate et au moins de 95 à 5 % en poids, par rapport au poids total des monomères, du deuxième monomère monoéthylénique porteur d'une fonction carboxylate.

De préférence, le copolymère (b) contient environ 50 % en poids, par rapport au poids total des monomères, de chacun des monomères monoéthyléniques porteurs d'une fonction carboxylate d'alkyle.

Le copolymère (b) utilisé aux fins de la présente invention peut également contenir des quantités inférieures ou égales à 5 % en poids, par rapport au poids total des monomères, d'autres monomères copolymérisables avec les monomères monoéthyléniques porteurs d'une fonction carboxylate. A titre d'exemples, on peut citer l'acide acrylique et l'acide méthacrylique.

Le polymère d'alpha-oléfine modifié (c) utilisable aux fins de la présente invention est un polymère qui peut être préparé à partir d'un homopolymère ou d'un copolymère d'une alpha-oléfine. Des exemples préférés de polymères d'alpha-oléfine comprennent le polyéthylène, le polypropylène, un copolymère éthylène-propylène, un copolymère éthylène-butène-1, un copolymère éthylène-4-méthylpentène-1, un copolymère propylène-butène-1, le polybutène-1 et des copolymères des alpha-oléfines précitées avec des quantités mineures de dioléfines ou d'esters d'acide carboxylique insaturé tels qu'un copolymère éthylène-butadiène, un copolymère propylène-butadiène, un copolymère éthylène-acétate de vinyle et un copolymère éthylène-acrylate d'éthyle.

Pour préparer un polymère d'alpha-oléfine modifié, on peut incorporer à un des polymères d'alpha-oléfine définis ci-avant ou à une composition de ces polymères au moins un groupe fonctionnel choisi parmi un carboxyle, un anhydride d'acide, un hydroxyle et un époxyde. Le groupe fonctionnel peut être introduit dans le polymère d'alpha-oléfine par une série de méthodes telles qu'une méthode dans laquelle un monomère polymérisable portant le groupe fonctionnel est incorporé dans le polymère d'alpha-oléfine par copolymérisation statistique, à bloc ou par greffage; une méthode dans laquelle le groupe réactif du polymère d'alpha-oléfine réagit avec un composé portant le groupe fonctionnel ou un groupe pouvant former le groupe fonctionnel par réaction; et une méthode dans laquelle le polymère d'alpha-oléfine est modifié par oxydation, hydrolyse ou toute autre méthode appropriée. La première et la troisième méthodes sont préférées parce qu'elles permettent d'introduire facilement le groupe fonctionnel dans le polymère d'alpha-oléfine et en quantité contrôlée. La copolymérisation par greffage est particulièrement préférée pour deux raisons : une faible quantité de groupe fonctionnel est suffisante pour améliorer l'adhésion et le polymère modifié ne subit pas une trop grande détérioration de ses propriétés physiques.

Des exemples de monomères portant un groupe carboxyle ou anhydride d'acide sont l'acide acrylique, l'acide méthacrylique, l'acide maléique, l'acide fumarique, l'acide itaconique, l'acide crotonique, l'acide citraconique, l'anhydride maléique, l'anhydride itaconique, l'anhydride crotonique et l'anhydride citraconique. L'acide acrylique et l'anhydride maléique sont préférées dans le but d'améliorer l'adhésion. L'anhydride maléique est tout particulièrement préférée.

Un groupe hydroxyle peut être introduit par hydrolyse d'un copolymère d'un ester vinylique tel que l'acétate de vinyle ou le propionate de vinyle ou par copolymérisation d'un alcool insaturé tel qu'un alcool dihydrique avec un ester d'acide acrylique ou méthacrylique.

Des exemples de monomères portant un groupe hydroxyle sont l'acrylate et le méthacrylate de 2-hydroxyéthyle, l'acrylate et le méthacrylate de 2-hydroxypropyle, l'acrylate et le méthacrylate de 2-hydroxybutyle, l'acrylamide et le méthacrylamide de N-méthylol, le 2-propyn-1-ol et des éthers hydroxyvinyliques.

Des exemples de monomères portant un groupe époxyde sont l'acrylate de glycidyle, le méthacrylate de glycidyle, l'éthylacrylate de glycidyle, l'itaconate de mono- et de diglycidyle, le maléate de mono- et de diglycidyle, l'allylsuccinate de mono- et de diglycidyle, l'éther allylglycidyle, l'éther 2-méthylallylglycidyle, le p-glycidylstyrène, le 3,4-époxy-1-butène, le 3,4-époxy-3-méthyl-1-butène et le monoxyde de vinylcyclohexène.

Le polymère d'alpha-oléfine modifié (c) tout particulièrement préféré est du polyéthylène greffé par l'anhydride maléique.

Le polymère d'alpha-oléfine modifié peut contenir au moins 0,1 % en poids de groupe fonctionnel. Le polymère d'alpha-oléfine modifié peut contenir au moins 0,5 %; au moins 1 %; au moins 10 %; au moins 20 % ou au moins 30 % en poids de groupe fonctionnel.

Alternativement, le polymère d'alpha-oléfine modifié peut contenir au plus 30 % en poids de groupe fonctionnel. Le polymère d'alpha-oléfine modifié peut contenir au plus 20 %; au plus 10 %; au plus 1 %; au plus 0,5 % ou au plus 0,1 % en poids de groupe fonctionnel.

En vue d'obtenir de bonnes forces de pelage, il est préférable que le polymère d'alpha-oléfine modifié contienne au moins 0,1 % en poids de groupe fonctionnel. De manière préférée, le polymère d'alpha-oléfine modifié contient au moins 0,5 % en poids de groupe fonctionnel. De manière tout particulièrement préférée, le polymère d'alpha-oléfine modifié contient au moins 1 % en poids de groupe fonctionnel.

En vue d'obtenir une aptitude au moulage et des propriétés physiques améliorées (comme par exemple un bon équilibre entre la résistance au choc et la rigidité), il est préférable que le polymère d'alpha-oléfine modifié contienne au plus 30 % en poids de groupe fonctionnel. De manière préférée, le polymère d'alpha-oléfine modifié contient au plus 20 % en poids de groupe fonctionnel. De manière tout particulièrement préférée, le polymère d'alpha-oléfine modifié contient au plus 10 % en poids de groupe fonctionnel.

Le polymère thermoplastique d'hydrocarbure halogéné (a) est présent dans le mélange homogène constituant l'adhésif polymérique de la présente invention, pour un poids total de 100 %, en une quantité d'au moins 20 %; d'au moins 25 %; d'au moins 30 %; d'au moins 72 %; d'au moins 77 % ou d'au moins 80 %.

Alternativement, le polymère thermoplastique d'hydrocarbure halogéné (a) est présent dans le mélange homogène constituant l'adhésif polymérique de la présente invention, pour un poids total de 100 %, en une quantité d'au plus 80 %; d'au plus 77 %; d'au plus 72 %; d'au plus 30 %; d'au plus 25 % ou d'au plus 20 %.

De manière préférée, le polymère thermoplastique d'hydrocarbure halogéné (a) est présent dans le mélange homogène constituant l'adhésif polymérique de la présente invention, pour un poids total de 100 %, en une quantité d'au moins 25 %. De manière tout particulièrement préférée, le polymère thermoplastique d'hydrocarbure halogéné (a) est présent dans le mélange homogène constituant l'adhésif polymérique de la présente invention, pour un poids total de 100 %, en une quantité d'au moins 30 %.

De manière préférée, le polymère thermoplastique d'hydrocarbure halogéné (a) est présent dans le mélange homogène constituant l'adhésif polymérique de la présente invention, pour un poids total de 100 %, en une quantité d'au plus 77 %. De manière tout particulièrement préférée, le polymère thermoplastique d'hydrocarbure halogéné (a) est présent dans le mélange homogène constituant l'adhésif polymérique de la présente invention, pour un poids total de 100 %, en une quantité d'au plus 72 %.

Le copolymère de monomères monoéthyléniques porteurs d'une fonction carboxylate d'alkyle (b) est présent dans le mélange homogène constituant l'adhésif polymérique de la présente invention, pour un poids total de 100 %, en une quantité d'au moins 3 %; d'au moins 5 %; d'au moins 7 %; d'au moins 30 %; d'au moins 35 % ou d'au moins 40 %.

Alternativement, le copolymère de monomères monoéthyléniques porteurs d'une fonction carboxylate d'alkyle (b) est présent dans le mélange homogène constituant l'adhésif polymérique de la présente invention, pour un poids total de 100 %, en une quantité d'au plus 40 %; d'au plus 35 %; d'au plus 30 %; d'au plus 7 %; d'au plus 5 % ou d'au plus 3 %.

De manière préférée, le copolymère de monomères monoéthyléniques porteurs d'une fonction carboxylate d'alkyle (b) est présent dans le mélange homogène constituant l'adhésif polymérique de la présente invention, pour un poids total de 100 %, en une quantité d'au moins 5 %. De manière tout particulièrement préférée, le copolymère de monomères monoéthyléniques porteurs d'une fonction carboxylate d'alkyle (b) est présent dans le mélange homogène constituant l'adhésif polymérique de la présente invention, pour un poids total de 100 %, en une quantité d'au moins 7 %.

De manière préférée, le copolymère de monomères monoéthyléniques porteurs d'une fonction carboxylate d'alkyle (b) est présent dans le mélange homogène constituant l'adhésif polymérique de la présente invention, pour un poids total de 100 %, en une quantité d'au plus 35 %. De manière tout particulièrement préférée, le copolymère de monomères monoéthyléniques porteurs d'une fonction carboxylate d'alkyle (b) est présent dans le mélange homogène constituant l'adhésif polymérique de la présente invention, pour un poids total de 100 %, en une quantité d'au plus 30 %.

Le polymère d'alpha-oléfine modifié par l'incorporation d'au moins un groupe fonctionnel choisi parmi un carboxyle, un anhydride d'acide, un hydroxyle et un époxyde (c) est présent dans le mélange homogène constituant l'adhésif polymérique de la présente invention, pour un poids total de 100 %, en une quantité d'au moins 15 %; d'au moins 17 %; d'au moins 20 %; d'au moins 45 %; d'au moins 50 % ou d'au moins 55 %.

Alternativement, le polymère d'alpha-oléfine modifié par l'incorporation d'au moins un groupe fonctionnel choisi parmi un carboxyle, un anhydride d'acide, un hydroxyle et un époxyde (c) est présent dans le mélange homogène constituant l'adhésif polymérique de la présente invention, pour un poids total de 100 %, en une quantité d'au plus 55 %; d'au plus 50 %; d'au plus 45 %; d'au plus 20 %; d'au plus 17 % ou d'au plus 15 %.

De manière préférée, le polymère d'alpha-oléfine modifié par l'incorporation d'au moins un groupe fonctionnel choisi parmi un carboxyle, un anhydride d'acide, un hydroxyle et un époxyde (c) est présent dans le mélange homogène constituant l'adhésif polymérique de la présente invention, pour un poids total de 100 %, en une quantité d'au moins 17 %. De manière tout particulièrement préférée, le polymère d'alpha-oléfine modifié par l'incorporation d'au moins un groupe fonctionnel choisi parmi un carboxyle, un anhydride d'acide, un hydroxyle et un époxyde (c) est présent dans le mélange homogène constituant l'adhésif polymérique de la présente invention, pour un poids total de 100 %, en une quantité d'au moins 20 %.

De manière préférée, le polymère d'alpha-oléfine modifié par l'incorporation d'au moins un groupe fonctionnel choisi parmi un carboxyle, un anhydride d'acide, un hydroxyle et un époxyde (c) est présent dans le mélange homogène constituant l'adhésif polymérique de la présente invention, pour un poids total de 100 %, en une quantité d'au plus 50 %. De manière tout particulièrement préférée, le polymère d'alpha-oléfine modifié par l'incorporation d'au moins un groupe fonctionnel choisi parmi un carboxyle, un anhydride d'acide, un hydroxyle et un époxyde (c) est présent dans le mélange homogène constituant l'adhésif polymérique de la présente invention, pour un poids total de 100 %, en une quantité d'au plus 45 %.

La présente invention concerne également un procédé de préparation de l'adhésif polymérique.

Le procédé de préparation de l'adhésif polymérique peut être réalisé par mélange homogène d'au moins trois constituants: (a) au moins un polymère thermoplastique d'hydrocarbure halogéné, (b) au moins un copolymère de monomères monoéthyléniques porteurs d'une fonction carboxylate d'alkyle et (c) au moins un polymère d'alpha-oléfine modifié par l'incorporation d'au moins un groupe fonctionnel choisi parmi un carboxyle, un anhydride d'acide, un hydroxyle et un époxyde.

Le mélange homogène des constituants (a), (b) et (c) de l'adhésif polymérique peut être effectué selon toutes les techniques de mélange connues; les ingrédients se trouvant à l'état solide ou à l'état fondu. Pour assurer l'homogénéité du mélange et la bonne dispersion des constituants dans l'adhésif polymérique, on pratique généralement un malaxage dans la zone de température correspondant à l'état viscoélastique des polymères.

Le malaxage peut être réalisé par tout moyen connu à cet effet. Ainsi, on peut travailler indifféremment en malaxeurs du type externe ou du type interne. Les malaxeurs du type interne sont préférés, et plus particulièrement les extrudeuses qui constituent une classe particulière de malaxeurs internes. Le malaxage peut être effectué dans les conditions habituelles bien connues de l'homme du métier.

Indifféremment, on peut mélanger les trois constituants ensembles ou d'abord en mélanger deux, suivi du mélange avec le troisième.

La température de malaxage n'est pas critique et est conditionnée par la nature et les températures de décomposition des ingrédients. Généralement, on travaille à des températures ne dépassant pas 250°C (220°C pour les polyamides).

La durée du malaxage est choisie en tenant compte de la nature des polymères constitutifs du mélange et de la température appliquée. La durée du malaxage peut être d'au moins 5 secondes, d'au moins 10 secondes, d'au moins 15 secondes, d'au moins 10 minutes, d'au moins 15 minutes ou d'au moins 20 minutes.

Alternativement, la durée du malaxage peut être d'au plus 20 minutes, d'au plus 15 minutes, d'au plus 10 minutes, d'au plus 15 secondes, d'au plus 10 secondes ou d'au plus 5 secondes.

De manière préférée, la durée du malaxage est d'au moins 10 secondes. De manière plus que préférée, la durée du malaxage est d'au moins 15 secondes.

De manière préférée, la durée du malaxage est d'au plus 15 minutes. De manière plus que préférée, la durée du malaxage est d'au plus 10 minutes.

La présente invention concerne l'utilisation de l'adhésif polymérique selon l'invention pour la préparation de structures à couches polymériques multiples.

Cet adhésif polymérique constitue la couche désignée "couche (B)".

Des constituants supplémentaires en quantités mineures peuvent être incorporés au mélange constituant la couche (B) à base d'un adhésif polymérique. A titre d'exemples, on peut citer des élastomères fluorés (comme le caoutchouc fluoré DAI-EL® G 801), des élastomères acryliques (comme les copolymères méthacrylate de méthyle-butadiène) et des copolymères éthylène-propylène, éthylène-butène-1, propylène-butène-1 et butadiène-styrène. Avantageusement, la quantité totale du ou des constituants supplémentaires ne dépasse pas 5 % en poids, par rapport au poids total de la couche (B).

L'invention concerne également des structures à couches polymériques multiples comprenant une couche (A) à base de polymère thermoplastique d'hydrocarbure halogéné liée à une couche (C) à base de polymère thermoplastique non halogéné non compatible avec (A) choisi parmi les polyoléfines et les polyamides par l'intermédiaire d'une couche (B) à base d'un adhésif polymérique tel que défini plus haut.

Par structures à couches polymériques multiples comprenant une couche (A) à base de polymère thermoplastique d'hydrocarbure halogéné liée à une couche (C) à base de polymère thermoplastique non halogéné non compatible avec (A), on entend désigner les structures multicouches contenant au moins une couche (A) à base de polymère thermoplastique d'hydrocarbure halogéné liée à au moins une couche (C) à base de polymère thermoplastique non halogéné non compatible avec (A). Les structures à couches polymériques multiples selon l'invention peuvent donc contenir une ou plusieurs couches (A) à base de polymère thermoplastique d'hydrocarbure halogéné liée à une ou plusieurs couches (C) à base de polymère thermoplastique non halogéné non compatible avec (A), ces couches pouvant elles-mêmes être liées à des couches d'autres polymères, de métal et/ou de tissu.

Les structures à couches polymériques multiples selon l'invention comprennent de préférence une couche (A) à base de polymère thermoplastique d'hydrocarbure fluoré. De manière plus que préférée, elles comprennent une couche (A) à base de polymère du fluorure de vinylidène.

Le polymère thermoplastique d'hydrocarbure halogéné constituant la couche (A) peut être identique ou différent du polymère thermoplastique d'hydrocarbure halogéné (a) qui est un des constituants de la couche (B). Avantageusement, on utilise comme constituant de la couche (A) un polymère thermoplastique d'hydrocarbure halogéné de la même nature que le polymère thermoplastique d'hydrocarbure halogéné (a) qui est un des constituants de la couche (B).

D'autres polymères compatibles avec le polymère thermoplastique d'hydrocarbure halogéné constituant la couche (A) peuvent également être mélangés avec ce dernier. Un exemple d'un tel mélange est une composition de polymère du fluorure de vinylidène et de polyméthacrylate de méthyle.

Les structures à couches polymériques multiples selon l'invention comprennent une couche (C) à base de polymère thermoplastique d'hydrocarbure non halogéné non compatible avec (A).

Les polymères thermoplastiques non halogénés non compatibles avec (A), sont les polyoléfines et les polyamides, ainsi que les mélanges de ces polymères.

Parmi les polyoléfines, le polymère thermoplastique non halogéné préféré est le polyéthylène. De manière plus que préférée, le polymère thermoplastique non halogéné est le polyéthylène de haute densité.

Parmi les polyamides, le polymère thermoplastique non halogéné préféré est le polyamide 12.

Par polyoléfines, on entend désigner les homopolymères et les copolymères d'alpha-oléfines telles que l'éthylène, le propylène, le butène, l'hexène, l'octène et le décène. Des exemples préférés d'homopolymères et de copolymères d'alpha-oléfines comprennent le polyéthylène, le polypropylène, un copolymère éthylène-propylène, un copolymère éthylène-butène-1, un copolymère éthylène-4-méthylpentène-1, un copolymère propylène-butène-1, le polybutène-1 et des copolymères des alpha-oléfines précitées avec des quantités mineures de dioléfines ou d'esters d'acide carboxylique insaturé tels qu'un copolymère éthylène-butadiène, un copolymère propylène-butadiène, un copolymère éthylène-acétate de vinyle et un copolymère éthylène-acrylate d'éthyle. On peut également citer les élastomères et les caoutchoucs thermoplastiques à base d'alpha-oléfines (comme par exemple les caoutchoucs thermoplastiques de la marque SANTOPRENE®). La polyoléfine préférée est le polyéthylène. Comme polyéthylène, on peut citer le polyéthylène de basse densité, le polyéthylène linéaire de basse densité, le polyéthylène de moyenne densité, le polyéthylène de haute densité, le polyéthylène de ultra-haute densité. Parmi ces polyéthylènes, le polyéthylène de haute densité est particulièrement préféré.

Par polyamides, on entend désigner des polymères possédant des séquences polyamides pouvant être obtenus par exemple à partir de caprolactame, d'hexaméthylènediamine et d'acide adipique, d'hexaméthylènediamine et d'acide sébacique, d'acide undécanoïque et de dodécalactame. On peut par exemple citer le polyamide 6, le polyamide 6-6, le polyamide 6-10, le polyamide 11 et le polyamide 12. Parmi ces polyamides, le polyamide 12 est préféré.

Les structures à couches polymériques multiples selon l'invention comprennent une couche (B) à base d'un adhésif polymérique tel que défini plus haut.

Il est entendu que chacun des polymères constitutifs des structures à couches polymériques multiples selon l'invention peut comprendre les additifs usuels utilisés lors de la fabrication ou lors de la mise en oeuvre de ce polymère, tels que, par exemple, des lubrifiants, des plastifiants, des stabilisants thermiques, des stabilisants à la lumière, des charges particulaires ou fibreuses, des pigments, des ignifugeants, etc., pour autant que ces additifs ne perturbent pas les objets de la présente invention.

L'invention concerne également le procédé de préparation des structures à couches polymériques multiples.

Pour préparer les structures à couches polymériques multiples selon l'invention, on peut faire appel à toutes les techniques usuelles d'assemblage de couches polymériques. A titre d'exemple de pareilles techniques, on peut citer le thermocollage à l'intervention d'une solution de la couche (B) à base d'un adhésif polymérique dans un solvant ou un mélange de solvants. D'autres techniques d'assemblage de couches polymériques usuelles et appropriées pour réaliser les structures à couches polymériques multiples selon l'invention sont celles dans lesquelles les polymères constitutifs sont mis en oeuvre à une température au moins égale à leur température de ramollissement. A titre d'exemples, on peut citer le thermolaminage (pressage à chaud de couches polymériques préformées, par exemple, par extrusion), la coextrusion, la coextrusion-doublage, la coextrusion-soufflage et la coextrusion-moulage.

Le choix de l'une ou l'autre de ces techniques d'assemblage se fait en fonction de l'usage auquel on destine les structures à couches polymériques multiples. Par exemple, les tuyaux, les tubes, les films, les feuilles et les plaques sont de préférence assemblés par coextrusion.

Ainsi, le procédé de préparation de structures à couches polymériques multiples est de préférence effectué par coextrusion d'une couche (A) à base de polymère thermoplastique d'hydrocarbure halogéné et d'une couche (C) à base de polymère thermoplastique non halogéné non compatible avec (A) auxquelles on coextrude en intermédiaire servant de liant une couche (B) à base d'un adhésif polymérique selon l'invention.

L'épaisseur des couches polymériques constitutives des structures à couches polymériques multiples selon l'invention et l'épaisseur totale desdites structures ne sont pas critiques et dépendent bien entendu de l'usage auquel on les destine. De préférence, l'épaisseur totale desdites structures ne dépasse pas 2 mm.

L'épaisseur de la couche (A) peut être d'au moins 100 µm, d'au moins 200 µm ou d'au moins 600 µm. L'épaisseur de la couche (B) peut être d'au moins 30 µm, d'au moins 100 µm ou d'au moins 400 µm. L'épaisseur de la couche (C) peut être d'au moins 100 µm, d'au moins 500 µm ou d'au moins 800 µm.

Alternativement, l'épaisseur de la couche (A) peut être d'au plus 600 µm, d'au plus 200 µm ou d'au plus 100 µm. L'épaisseur de la couche (B) peut être d'au plus 400 µm, d'au plus 100 µm ou d'au plus 30 µm. L'épaisseur de la couche (C) peut être d'au plus 800 µm, d'au plus 500 µm ou d'au plus 100 µm.

De manière préférée, l'épaisseur de la couche (A) est d'environ 200 µm. De manière préférée, l'épaisseur de la couche (B) est d'environ 100 µm. De manière préférée, l'épaisseur de la couche (C) est d'environ 500 µm.

L'invention concerne également l'utilisation des structures à couches polymériques multiples selon l'invention pour la fabrication de tubes, de tuyaux, de films, de feuilles, de plaques et de corps creux.

Les structures à couches polymériques multiples selon l'invention peuvent être utilisées avantageusement dans des domaines d'application exigeant une bonne imperméabilité aux liquides et aux gaz, associée à une inertie chimique élevée. A titre d'exemples pratiques non limitatifs d'utilisations de structures à couches polymériques multiples selon l'invention, on peut signaler des tuyaux destinés au transport de carburant, de produits corrosifs ou d'eaux ultra pures; des tubes conduisant du gaz; des films destinés à la protection contre la corrosion de pièces de carrosserie de véhicules automobiles; des films, des feuilles et des plaques composites pour des applications dans le domaine du bâtiment et de l'agriculture; des flacons d'emballage; des réservoirs de stockage de liquides et des réservoirs à essence.

L'invention concerne en outre une méthode permettant de faire adhérer une couche (A) à base de polymère thermoplastique d'hydrocarbure halogéné à une couche (C) à base de polymère thermoplastique non halogéné non compatible avec (A).

Les structures à couches polymériques multiples de la présente invention possèdent une bonne force de pelage et combinent les avantages d'un polymère thermoplastique d'hydrocarbure halogéné avec les propriétés inhérentes au polymère thermoplastique non halogéné auquel il est lié.

Les exemples qui suivent sont destinés à illustrer la présente invention sans toutefois en limiter la portée.

Dans tous les exemples, la force de pelage a été mesurée sur une machine INSTRON CORPORATION après 7 jours de repos des structures extrudées par la méthode suivante : on mesure le niveau d'adhésion entre la couche de PVDF et la couche de PEHD ou de PA en effectuant un essai de pelage sur des tubes de 8 x 6 mm à une vitesse de 25 mm/min, le résultat étant exprimé en N/cm.

La résistance chimique des structures à couches polymériques multiples a été mesurée après immersion dans le carburant CTF 2 (mélange de 46,25 % d'isooctane, de 46,25 % de toluène, de 2,5 % d'éthanol et de 5 % de méthanol) à 60°C pendant 7, 15 et 30 jours. L'évolution des caractéristiques dimensionnelles a été suivie (pour les exemples 2, 3 et 4), ainsi que la résistance au pelage des structures tant imbibées de carburant qu'après désorption pendant 42 heures (pour les exemples 2 et 3).

La résistance mécanique des structures à couches polymériques multiples a été évaluée par le test Hoop Stress qui est un test de résistance à l'éclatement direct à 60°C sous une pression de N₂ (pour les exemples 2, 3 et 4).

### Exemple 1

Un mélange adhésif homogène a été formé par malaxage à sec de 66,7 % en poids d'un homopolymère du fluorure de vinylidène (PVDF) (SOLEF® 1010 de SOLVAY), de 11,1 % en poids de copolymère de méthacrylate de méthyle et de méthacrylate de glycidyle (50 %/50 % en poids) (copolymère MMA-GMA) (BLEMMER® CP 50 M de NIPPON OIL & FATS) et de 22,2 % d'un homopolymère linéaire d'éthylène basse densité (L-LDPE) greffé par l'anhydride maléique (ADMER® NF 530 E de MITSUI & Co.).

Une structure (tube) à trois couches a été obtenue par coextrusion de ce mélange adhésif homogène avec une couche interne de PVDF et une couche externe d'un homopolymère de l'éthylène de haute densité (PEHD) (ELTEX® TUB 131 de SOLVAY) à l'aide de 3 extrudeuses monovis (COLLIN) agencées autour d'une filière de façon à obtenir des tubes de 8 x 6 mm (c'est-à-dire de diamètre externe de 8 mm et de diamètre interne de 6 mm).

L'épaisseur des couches a été d'environ 200 µm pour le PVDF, d'environ 100 µm pour le mélange adhésif et d'environ 500 µm pour le PEHD.

La résistance au pelage qui a été mesurée est de 12 N/cm.

### Exemple 2

Un mélange adhésif homogène a été formé comme dans l'exemple 1 avec 66,7 % en poids de PVDF, 8,3 % en poids de copolymère MMA-GMA et 25,0 % en poids de PE greffé par l'anhydride maléique.

Une structure (tube) à trois couches a été obtenue par coextrusion de ce mélange adhésif homogène avec une couche interne de PVDF et une couche externe de PEHD comme dans l'exemple 1.

La résistance au pelage qui a été mesurée est de 11 N/cm. Après immersion dans le carburant CTF 2 à 60°C pendant 30 jours, la résistance au pelage est tombée à 4 N/cm mais est remontée à 5 N/cm après séchage pendant 42 heures.

L'étude de la résistance chimique des tubes dans le carburant CTF 2 a montré une rapide mise à l'équilibre pour une prise de poids de l'ordre de 10 % et un allongement moyen de 1,5 %.

La résistance à l'éclatement (Hoop Stress) qui a été mesurée est de 15,8 MPa.

### Exemple 3

Une structure (tube) à trois couches a été obtenue par coextrusion du même mélange adhésif homogène que dans l'exemple 1 avec une couche interne d'un homopolymère de PVDF (SOLEF® 1010 de SOLVAY) et une couche externe de polyamide 12 (PA 12) (GRILAMID® L 25 W 40 de EMS CHEMIE) à l'aide des mêmes extrudeuses que dans l'exemple 1.

La résistance au pelage qui a été mesurée est de 13 N/cm. Après immersion dans le carburant CTF 2 à 60°C pendant 30 jours, la résistance au pelage est tombée à 3 N/cm mais est remontée à 4 N/cm après séchage pendant 42 heures.

L'étude de la résistance chimique des tubes dans le carburant CTF 2 a montré une rapide mise à l'équilibre pour une prise de poids de l'ordre de 7,6 % et un allongement moyen de 1 %.

La résistance à l'éclatement qui a été mesurée est de 14,0 MPa.

### Exemple 4

Un mélange adhésif homogène a été formé comme dans l'exemple 1 avec 71,4 % en poids de PVDF, 7,1 % en poids de copolymère MMA-GMA et 21,5 % en poids de PE greffé par l'anhydride maléique.

Une structure (tube) à trois couches a été obtenue par coextrusion de ce mélange adhésif homogène avec une couche interne de PVDF et une couche externe de polyamide 6.36 (SNIAMID® PSB 162 A de NYLTECH) à l'aide des mêmes extrudeuses que dans l'exemple 1.

La résistance au pelage qui a été mesurée est de 11 N/cm.

L'étude de la résistance chimique des tubes dans le carburant CTF 2 a montré une rapide mise à l'équilibre pour une prise de poids de l'ordre de 6,3 % et un allongement moyen de 1,5 %.

La résistance à l'éclatement qui a été mesurée est de 14,5 MPa.

## Revendications

1. Structures à couches polymériques multiples comprenant une couche (A) à base de polymère thermoplastique d'hydrocarbure halogéné liée à une couche (C) à base de polymère thermoplastique non halogéné non compatible avec (A) par l'intermédiaire d'une couche (B) à base d'un adhésif polymérique **caractérisées en ce que** ledit polymère thermoplastique non halogéné est choisi parmi les polyoléfines et les polyamides et **en ce que** l'adhésif polymérique comprend un mélange homogène d'au moins trois constituants : (a) au moins un polymère thermoplastique d'hydrocarbure halogéné, (b) au moins un copolymère de monomères monoéthyléniques porteurs d'une fonction carboxylate d'alkyle et (c) au moins un polymère d'alpha-oléfine modifié par l'incorporation d'au moins un groupe fonctionnel choisi parmi un carboxyle, un anhydride d'acide, un hydroxyle et un époxyde.

2. Structures à couches polymériques multiples selon la revendication 1 comprenant une couche (A) à base d'un polymère thermoplastique d'hydrocarbure fluoré.

3. Structures à couches polymériques multiples selon l'une quelconque des revendications 1 à 2 comprenant une couche (A) à base d'un polymère du fluorure de vinylidène.

4. Structures à couches polymériques multiples selon l'une quelconque des revendications 1 à 3 comprenant une couche (C) à base d'un polymère thermoplastique non halogéné non compatible avec (A) qui est choisi parmi le polyéthylène et le polyamide 12.

5. Procédé de préparation de structures à couches polymériques multiples par coextrusion d'une couche (A) à base de polymère thermoplastique d'hydrocarbure halogéné et d'une couche (C) à base de polymère thermoplastique non halogéné non compatible avec (A), **caractérisé en ce que** l'on coextrude en intermédiaire servant de liant une couche (B) à base d'un adhésif polymérique et **en ce que** ledit polymère thermoplastique non halogéné est choisi parmi les polyoléfines et les polyamides et l'adhésif polymérique'comprend un mélange homogène d'au moins trois constituants : (a) au moins un polymère thermoplastique d'hydrocarbure halogéné, (b) au moins un copolymère de monomères monoéthyléniques porteurs d'une fonction carboxylate d'alkyle et (c) au moins un polymère d'alpha-oléfine modifié par l'incorporation d'au moins un groupe fonctionnel choisi parmi un carboxyle, un anhydride d'acide, un hydroxyle et un époxyde.

6. Utilisation des structures à couches polymériques multiples selon l'une quelconque des revendications 1 à 4 pour la fabrication de tubes, de tuyaux, de films, de feuilles, de plaques et de corps creux.

## Claims

1. Structures with multiple polymeric layers comprising a layer (A) based on thermoplastic halogenated hydrocarbon polymer bonded to a layer (C) based on thermoplastic nonhalogenated polumer via a layer (B) based on a polymeric adhesive, **characterized in that** said thermoplastic nonhalogenated polymer is selected from polyolefins and polyamides and **in that** the polymeric adhesive comprises a homogeneous mixture of at least three constituents: (a) at least one thermoplastic halogenated hydrocarbon polymer, (b) at least one copolymer of monoethylenic monomers which carry an alkyl carboxylate functional group and (c) at least one alpha-olefin polymer modified by the incorporation of at least one functional group chosen from a carboxyl, an acid anhydride, a hydroxyl and an epoxide.

2. Structures with multiple polymeric layers according to Claim 1, comprising a layer (A) based on a thermoplastic fluorinated hydrocarbon polymer.

3. Structures with multiple polymeric layers according to either one of Claims 1 and 2, comprising a layer (A) based on a vinylidene fluoride polymer.

4. Structures with multiple polymeric layers according to any one of Claims 1 to 3, comprising a layer (C) based on a thermoplastic nonhalogenated polymer incompatible with (A) which is chosen from polyethylene and polyamid-12.

5. Process for the preparation of structures with multiple polymeric layers by coextrusion of a layer (A) based on thermoplastic halogenated hydrocarbon polymer and of a layer (C) based on thermoplastic nonhalogenated polymer incompatible with (A), **characterized in that** a layer (B) based on a polymeric adhesive is coextruded as an intermediate acting as binder, **in that** said thermoplastic nonhalogenated polymer is selected from polyolefins and polyamides and **in that** said polymeric adhesive comprises a polymeric adhesive mixture of at least three constituents : (a) a least one thermoplastic halogenated hydrocarbon polymer, (b) at least one copolymer of monoethylenic monomers which carry an alkyl carboxylate functional group and (c) at least one alpha-olefin polymer modified by the incorporation of at least one functional group chosen from a carboxyl, an acid anhydride, a hydroxyl and an epoxide.

6. Use of the structures with multiple polymeric layers according to any one of Claims 1 to 4 in the manufacture of pipes, tubes, films, sheets, panels and hollow bodies.

## Patentansprüche

1. Strukturen mit mehreren Polymerschichten, umfassend eine Schicht (A) auf Basis von thermoplastischem Polymer von halogeniertem Kohlenwasserstoff, die über eine Schicht (B) auf Basis eines Polymerklebstoffs an eine Schicht (C) auf Basis von nicht mit (A) verträglichem nichthalogeniertem thermoplastischem Polymer gebunden ist, **dadurch gekennzeichnet, daß** das nichthalogenierte thermoplastische Polymer unter Polyolefinen und Polyamiden ausgewählt ist und der Polymerklebstoff eine homogene Mischung von mindestens drei Bestandteilen umfaßt: (a) mindestens einem thermoplastischen Polymer von halogeniertem Kohlenwasserstoff, (b) mindestens einem Copolymer von monoethylenischen Monomeren mit einer Carbonsäurealkylesterfunktion und (c) mindestens einem durch Einbau mindestens einer unter Carboxyl, Säureanhydrid, Hydroxyl und Epoxid ausgewählten funktionellen Gruppe modifizierten alpha-Olefin-Polymer.

2. Strukturen mit mehreren Polymerschichten nach Anspruch 1, umfassend eine Schicht (A) auf Basis von thermoplastischem Polymer von fluoriertem Kohlenwasserstoff.

3. Strukturen mit mehreren Polymerschichten nach einem der Ansprüche 1 bis 2, umfassend eine Schicht (A) auf Basis von thermoplastischem Vinylidenfluorid-Polymer.

4. Strukturen mit mehreren Polymerschichten nach einem der Ansprüche 1 bis 3, umfassend eine Schicht (C) auf Basis von nicht mit (A) verträglichem nichthalogeniertem thermoplastischem Polymer, das unter Polyethylen und Polyamid 12 ausgewählt ist.

5. Verfahren zur Herstellung von Strukturen mit mehreren Polymerschichten durch Coextrusion einer Schicht (A) auf Basis von thermoplastischem Polymer von halogeniertem Kohlenwasserstoff, und einer Schicht (C) auf Basis von nicht mit (A) verträglichem nichthalogeniertem thermoplastischem Polymer, **dadurch gekennzeichnet, daß** man dazwischen eine als Bindemittel dienende Schicht (B) auf Basis eines Polymerklebstoffs coextrudiert, das nichthalogenierte thermoplastische Polymer unter Polyolefinen und Polyamiden ausgewählt wird und der Polymerklebstoff eine homogene Mischung von mindestens drei Bestandteilen umfaßt: (a) mindestens einem thermoplastischen Polymer von halogeniertem Kohlenwasserstoff, (b) mindestens einem Copolymer von monoethylenischen Monomeren mit einer Carbonsäurealkylesterfunktion und (c) mindestens einem durch Einbau mindestens einer unter Carboxyl, Säureanhydrid, Hydroxyl und Epoxid ausgewählten funktionellen Gruppe modifizierten alpha-Olefin-Polymer.

6. Verwendung von Strukturen mit mehreren Polymerschichten nach einem der Ansprüche 1 bis 4 zur Herstellung von Schläuchen, Rohren, Filmen, Folien, Platten und Hohlkörpern.
